# EUROPÄISCHE PATENTSCHRIFT

(11) **EP 1 803 493 B1**
(45) Veröffentlichungstag und Bekanntmachung des Hinweises auf die Patenterteilung: **14.10.2009**
(21) Anmeldenummer: 06027132.7
(22) Anmeldetag: 22.12.2006
(51) Int. Cl.: B01D 39/20, B01D 39/16

(54) **Verfahren zur Herstellung von Filtern**
Method for manufacturing filters
Procédé destiné à la fabrication de filtres

(30) Priorität: 22.12.2005 DE 102005061503
(43) Veröffentlichungstag der Anmeldung: 04.07.2007
(73) Patentinhaber: Infiltec GmbH, 67346 Speyer (DE)
(72) Erfinder: Dobrick, Michele, 69168 Wiesloch (DE); Stock, Manfred, 67346 Speyer (DE)
(74) Vertreter: Zellentin, Wiger

(56) Entgegenhaltungen:
- DE-A1- 10 117 435
- US-A- 3 474 600

## Beschreibung

Die vorliegende Erfindung betrifft ein Verfahren zur Herstellung von Filtern, die aus einer Mischung von Polyethylenteilchen mit einem Trägermaterial, wie vorzugsweise Aktivkohle, bestehen.

Aus der EP 1 117 706 B1 ist ein Filtermaterial, enthaltend Polyethylenhomopolymer oder -copolymer und Aktivkohle bekannt. Dieses Material ist auf eine sehr feinteilige Aktivkohle beschränkt und wird zur Entfernung unterschiedlicher Substanzen aus Wasser oder wässriger Lösung eingesetzt.

Die Herstellung erfolgt so, dass die feinteilige Aktivkohle mit dem ein Bindemittel darstellenden Polyethylen trocken vermischt und in eine Form eingefüllt wird. Danach wird dieses verdichtet und auf eine Temperatur erhitzt, die wesentlich über dem Schmelzbereich des Bindemittels liegt.

Nachteilig an dieser Vorgehensweise ist, dass diese einmal auf die Verwendung sehr feinteiliger Aktivkohle beschränkt ist. Verwendet man gröbere Partikel, so ist eine Entmischung, z.B. beim Einfüllen in Formen, unvermeidlich. Zum anderen führt natürlich das vollständige Aufschmelzen der Polyethylenbestandteile zu einer Herabsetzung der aktiven Oberfläche, da der Kunststoff diese versiegelt.

Verwendet man andere Trägermaterialen als Aktivkohle, wie z.B. Zeolithe, so wird die gleiche Entmischung beobachtet, so dass homogene Filterschichten nicht hergestellt werden können.

Aus der DE 101 17 435 A1 ist ein Verfahren zur Herstellung eines Filterkörpers bekannt, bei dem ein Gemisch aus einem feinkörnigen schmelzbaren Polymeren und einem sorptiv wirkenden körnigen Material unter Wärme und Druck unter Zusatz eines flüssigen Mediums zu einem Formkörper verpresst wird. Für die polymere Bindung wird dabei ein feinteiliges Polyethylen, als sorptiv wirkendes Material Aktivkohle und als flüssiges Medium Wasser eingesetzt.

Nachteilig ist dabei, wie auch in der EP 1 117 706 B1, dass die außen liegende Filterschicht insbesondere bei geringem Polyethylenanteil einem Abrieb unterliegt und das Trägermaterial in das flüssige oder gasförmige Filtrat ausgetragen wird.

Die vorliegende Erfindung hat sich daher die Aufgabe gestellt, ein Verfahren zu schaffen, mit welchem sehr homogene Verteilungen von Trägermaterial und Polyethylenteilchen erhalten werden, die sich bei mechanischer Beaufschlagung nicht entmischen und das es erlaubt, auch gröbere Trägerteilchen, wie z. B. Aktivkohlegranulate, zu verwenden, wobei ein Produkt geschaffen werden soll, das unter Beibehaltung der Eigenschaften des Trägermaterials einen Austrag von Material unterbindet.

Die Lösung dieser Aufgabe gelingt mit einem Verfahren gemäß Hauptanspruch, vorteilhafte Ausgestaltungen finden sich in den Unteransprüchen.

Überraschend ist dabei, dass, obwohl Trägermaterialien, wie z.B. Aktivkohleteilchen ebenso wie das Polyethylen nicht ohne weiteres mit Wasser benetzbar sind, eine homogene Mischung auch ohne Anwendung von Tensiden herstellbar ist, wobei letztere den Nachteil hätte, dass vor dem Einsatz als Filter diese erst ausgewaschen werden müssten.

Der bevorzugte Thermoplast wird vorliegend als UHMW- oder HMW- (Ultra high molecular weight oder high molecular weight) -Form des Polyethylens eingesetzt, besondere Vorteile werden bei der Verwendung von Aktivkohlegranulat erhalten, die mit mittleren Korngrößen von 100 µm bis hinauf zu 3 mm einsetzbar sind.

Andere bevorzugte Materialien sind Steinkohle oder verkokster Kunststoff.

Das Mischungsverhältnis des Trägermaterials mit den anzusinternden Polyethylenteilchen kann zwischen 99-50 Gew.-% Trägermaterial (Aktivkohle) und 1 - 50 Gew.-% Polyethylen liegen.

Letztlich wird vorgeschlagen, mit der außen liegenden Schicht des erfindungsgemäßen Filtermaterials eine sog. "Polizeischicht" zu verbinden, die ein Austragen von Filterteilchen in das Filtrat verhindert. In besonders eleganter Weise gelingt dies dadurch, dass man an die Außenschicht Kunststoffteilchen, wie insbesondere Polyethylenteilchen als Mantel ansintert, wie sie in der Filterschicht selbst schon vorhanden sind.

Wie oben schon erwähnt, ist für die Qualität der Filterblockherstellung eine homogene Ausgangsmischung der Komponenten Trägermaterial (insbesondere Aktivkohle) und Polyethylengranulat außerordentlich wichtig. Schon bei leichten Bewegungen entmischt sich eine zuvor sorgfältig hergestellte Mischung, insbesondere dann, wenn die Komponententeilchen je unterschiedliche Korngrößen aufweisen, dies ist insbesondere beim Einschütten in die Formen der Fall. Soll noch vor dem Verdichten gerüttelt werden, wird dieser negative Effekt verstärkt.

Dieses Problem wird erfindungsgemäß durch die Anwendung von Wasser behoben. Dabei wird so vorgegangen, dass entweder die Trägerteilchen und das Polyethylengranulat vorgemischt, mit Wasser besprüht und weiter gemischt werden, oder aber die Trägerteilchen schon vor dem Vermischen mit Wasser beaufschlagt werden. Das Mischen selbst ist dann kritisch, wenn, wie im Falle von Aktivkohlegranulat, diese gegen mechanische Beanspruchung sehr empfindlich sind. Rührwerke sind daher in diesem Falle zu vermeiden und es werden Mischgefäße eingesetzt, die um mindestens zwei Raumachsen bewegt werden. Dabei kommen die Komponententeilchen miteinander in Kontakt und werden adhäsiv gebunden.

Das Benetzen der Komponenten kann im Produktionsmaßstab auch durch Bedüsen mittels Wasser in einem Luftwirbelmischer oder in durchströmten Gefäßen, insbesondere Rohren, erfolgen.

Bevorzugt wird für das vorliegende Verfahren Kokosnussaktivkohle, da diese eine stabile Struktur besitzt. Die Kohle kann in Form von Granulat, Presslingen oder in Kugelform vorliegen.

Angestrebt werden erfindungsgemäß hohe Aktivkohleanteile, Anteile über 90 % gehen jedoch zu Lasten der Festigkeit. Besonders geeignet sind Mischungen von 60-75 Gew.-% Aktivkohieanteil,

Nach dem Einfüllen und Verdichten, gegebenenfalls unter Vibration wird die Masse mit Hilfe von Stempeln verdichtet und anschließend gesintert.

Die Sinterung erfolgt bei 190-220°C und abhängig von der Benetzung der AC-Kohle (Wassergehalt)und der Größe der Sinterform innerhalb von etwa 40-70 Min. Die Form sollte dabei so ausgebildet sein, dass das gebundene Wasser in der Aufheizphase entweichen kann. Wenn das Wasser nicht entweichen kann, muß der Filterblock in einem separaten Schritt getrocknet werden.

Nach dem Sintern wird die Form aus dem Ofen geholt und gekühlt. Danach wird der äußere Formmantel entfernt und durch eine Form mit einem größeren Durchmesser ersetzt. In dem entstandenen Hohlraum wird wieder PE-Granulat aufgefüllt und im Ofen bei z.B. 190°C an den AC-Block angesintert. Es entsteht ein AC-Filterblock mit einer angesinterten PE-Polizeifilterschicht.

## Patentansprüche

1. Verfahren zur Herstellung von Filtern durch Vermischen eines Trägermaterials mit Thermopfastteilchen, Einfüllen in eine Form und Erwärmten auf Sintertemperatur des Thermoplasten, wobei man das Trägermaterial und die Thermoplastteilchen vor dem Einfüllen in die Form mit Wasser anteigt, **dadurch gekennzeichnet, dass** man an eine Außenfläche des hergestellten Filters Polyethylenteilchen ansintert.

2. Verfahren nach Anspruch 1, **dadurch gekennzeichnet, dass** das Trägermaterial Aktivkohle ist.

3. Verfahren nach Anspruch 1 oder 2, **dadurch gekennzeichnet, dass** das Trägermaterial ein Aktivkohlegranulat ist.

4. Verfahren nach Anspruch 1-3, **dadurch gekennzeichnet, dass** der Thermoplast ein UHMW-PE oder HMW-PE (ultra high molecular weicht oder high molecular weight polyethylene) ist.

5. Verfahren nach Anspruch 1-4, **dadurch gekennzeichnet, dass** 99 - 50 Gew.-% Aktivkohle mit 1 - 50 Gew.-% Polyethylen gemischt werden.

6. Verfahren nach Anspruch 5, **gekennzeichnet durch** einen Anteil von 60-95 Gew.-% Aktivkohle.

7. Verfahren nach Anspruch 1-5, **dadurch gekennzeichnet, dass** das Trägermaterial ein Aktivkohlegranulat mit einer mittleren Korngröße von etwa 50 µm bis etwa 3 mm ist.

8. Verfahren nach Anspruch 2- 7, **dadurch gekennzeichnet, dass** die Aktivkohle Kokosnusskohle ist.

9. Verfahren nach Anspruch 1-8, **dadurch gekennzeichnet, dass** der Träger Steinkohle ist.

10. Verfahren nach Anspruch 1-8, **dadurch gekennzeichnet, dass** der Träger ein verkokter Kunststoff ist.

## Claims

1. Method for the production of filters by mixing a carrier material with particles of a thermoplastic material, filling into a mold, and heating to sintering temperature of the thermoplastic material, whereby the carrier material and particles of the thermoplastic material are formed into a paste with water before being filled into the mold,
**characterized in that** polyethylene particles are sintered to an external surface of said produced filter.

2. Method according to claim 1, **characterized in that** the carrier material is activated charcoal.

3. Method according to claim 1 or 2, **characterized in that** the carrier material consists of activated charcoal granules.

4. Method according to claim 1-3, **characterized in that** the thermoplastic material is a UHMW-PE or HMW-PE (ultra-high molecular weight or high molecular weight polyethylene).

5. Method according to claim 1-4, **characterized in that** 99-50 wt.-% activated charcoal are mixed with 1-50 wt.-% polyethylene.

6. Method according to claim 5, **characterized by** a fraction of 60-95 wt.-% activated charcoal.

7. Method according to claim 1-5, **characterized in that** the carrier material consists of activated charcoal granules having a mean grain size of approx. 50 µm to approx. 3 mm.

8. Method according to claim 2-7, **characterized in that** the activated charcoal is coconut coal.

9. Method according to claim 1-8, **characterized in that** the carrier material is hard coal.

10. Method according to claim 1-8, **characterized in that** the carrier material is a coked plastic material.

## Revendications

1. Procédé pour produire des filtres en mélangeant une matière support avec des particules de thermoplaste, en la versant dans un moule et en chauffant à la température de frittage du thermoplaste, avant fait empâte la matière support et les particules de thermoplaste avant de les verser dans le moule avec de l'eau, **caractérisé en ce que** l'on fritte des particules de polyéthylène sur une surface externe du filtre produit.

2. Procédé selon la revendication 1, **caractérisé en ce que** la matière support est le charbon actif.

3. Procédé selon la revendication 1 ou 2, **caractérisé en ce que** la matière support est un granulé de charbon actif.

4. Procédé selon les revendications 1 à 3, **caractérisé en ce que** le thermoplaste est un UHMW-PE ou HMW-PE ("ultra high molecular weight polyethylene" ou "high molecular weight polyethylene").

5. Procédé selon les revendications 1 à 4, **caractérisé en ce que** 99-50% en poids de charbon actif sont mélangés avec 1-50% en poids de polyéthylène.

6. Procédé selon la revendication 5, **caractérisé par** une proportion de 60-95% en poids de charbon actif.

7. Procédé selon les revendications 1 à 5, **caractérisé en ce que** la matière support est un granulé de charbon actif ayant une granulométrie moyenne d'environ 50 µm à environ 3 mm.

8. Procédé selon les revendications 2 à 7, **caractérisé en ce que** le charbon actif est le charbon de noix de coco.

9. Procédé selon les revendications 1 à 8, **caractérisé en ce que** le support est la houille.

10. Procédé selon les revendications 1 à 8, **caractérisé en ce que** le support est une matière plastique cokéfiée.
